(19) Europäisches Patentamt / European Patent Office / Office européen des brevets

(11) **EP 3 680 964 A1**

(12) **DEMANDE DE BREVET EUROPEEN**

(43) Date de publication:
**15.07.2020 Bulletin 2020/29**

(51) Int Cl.:
**H01M 4/13** (2010.01)      **H01M 4/133** (2010.01)
**H01M 4/134** (2010.01)      **H01M 4/1393** (2010.01)
**H01M 4/1395** (2010.01)      **H01M 10/052** (2010.01)

(21) Numéro de dépôt: **20150218.4**

(22) Date de dépôt: **03.01.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **08.01.2019 FR 1900168**

(71) Demandeur: **Commissariat à l'énergie atomique et aux énergies alternatives**
**75015 Paris (FR)**

(72) Inventeurs:
• GUTEL, Elise
  **38054 GRENOBLE CEDEX 09 (FR)**
• BLANC, Lionel
  **38054 GRENOBLE CEDEX 09 (FR)**
• PORCHER, Willy
  **38054 GRENOBLE CEDEX 09 (FR)**
• REYNIER, Yvan
  **38054 GRENOBLE CEDEX 09 (FR)**

(74) Mandataire: **Brevalex**
**95, rue d'Amsterdam**
**75378 Paris Cedex 8 (FR)**

(54) **ELECTRODES NEGATIVES UTILISABLES DANS DES ACCUMULATEURS FONCTIONNANT SELON LE PRINCIPE D'INSERTION ET DESINSERTION IONIQUE OU DE FORMATION D'ALLIAGE ET A CONFIGURATION SPIRALEE**

(57)      L'invention a trait à une électrode négative pour accumulateur fonctionnant selon le principe d'insertion et désinsertion ionique et/ou selon le principe de formation d'un alliage et de désalliage comprenant :

-une première couche (1) comprenant un matériau actif déposé, *via* une de ses faces, sur une première face d'un collecteur de courant (13) ;

-une deuxième couche (7) comprenant un matériau actif déposé, *via* une de ses faces, sur une deuxième face d'un collecteur de courant (13), ladite première face étant opposée à ladite deuxième face ;

ladite électrode négative s'étendant en longueur selon une direction longitudinale d'électrode,

caractérisée en ce que chacune des première couche et deuxième couche est revêtue partiellement d'un ensemble de bandes (2, 4, 6, 8, 10, 12, 14, 16, 18, 20, 22, 24, 26, 28, 30, 32, 34, 36, 38, 40, 42, 44, 46, 48) composées chacune d'un métal, dont les cations correspondants sont ceux intervenant dans le processus d'insertion et désinsertion ionique et/ou dans le processus de formation d'alliage et de désalliage dans le matériau actif de la première couche et de la deuxième couche, lesdites bandes étant écartées les unes des autres selon la direction longitudinale d'électrode et s'étendant chacune en longueur selon une direction longitudinale de bande sensiblement perpendiculaire à ladite direction longitudinale d'électrode.

FIG.1

EP 3 680 964 A1

**Description**

**DOMAINE TECHNIQUE**

La présente invention a trait à un nouveau type d'électrode négative destiné à être utilisé dans :

- des accumulateurs fonctionnant selon le principe d'insertion et désinsertion ionique dans le matériau actif de l'électrode (également désigné par le principe d'intercalation ou désintercalation ionique), des accumulateurs de ce type pouvant être des accumulateurs $M^1$-ion, avec $M^1$ correspondant à un élément alcalin (tel que Li, Na, K) ou des accumulateurs $M^2$-ion, avec $M^2$ correspondant à un élément alcalino-terreux (tel que Ca, Mg) ; ou
- des accumulateurs fonctionnant selon le principe de formation d'un alliage ou de désalliage avec l'un au moins des matériaux actifs d'électrode ;

ce nouveau type d'électrodes étant, en particulier, particulièrement adapté pour être incorporé dans des accumulateurs présentant une configuration spiralée.

Les accumulateurs de ce type ont pour vocation d'être utilisés comme source d'énergie autonome, en particulier, dans les équipements électroniques portables (tels que les téléphones mobiles, les ordinateurs portables, l'outillage), afin de remplacer progressivement les accumulateurs nickel-cadmium (NiCd) et nickel-hydrure métallique (NiMH). Ils peuvent également servir à fournir l'alimentation en énergie nécessaire aux nouvelles microapplications, telles que les cartes à puce, les capteurs ou autres systèmes électromécaniques ainsi que pour l'électromobilité.

Du point de vue de leur fonctionnement, les accumulateurs susmentionnés fonctionnent soit selon le principe d'insertion-désinsertion ionique dans les matériaux actifs ou soit selon le principe de formation d'un alliage et de désalliage avec au moins l'un des matériaux actifs, tel que le lithium qui peut former un alliage avec l'étain.

En prenant pour exemple, les accumulateurs au lithium, lors de la décharge de l'accumulateur, l'électrode négative libère du lithium sous forme ionique $Li^+$, qui migre à travers l'électrolyte conducteur ionique et vient s'incorporer dans le matériau actif de l'électrode positive pour former un matériau d'insertion ou un alliage. Le passage de chaque ion $Li^+$ dans le circuit interne de l'accumulateur est exactement compensé par le passage d'un électron dans le circuit externe, générant ainsi un courant électrique.

En revanche, lors de la charge de l'accumulateur, les réactions se produisant au sein de l'accumulateur sont les réactions inverses de la décharge, à savoir que :

- l'électrode négative va incorporer du lithium dans le réseau du matériau la constituant, pour former un matériau d'insertion ou un alliage ; et
- l'électrode positive va libérer du lithium, lequel va s'incorporer dans le matériau de l'électrode négative pour former un matériau d'insertion ou un alliage.

Lors du premier cycle de charge de l'accumulateur, quand le matériau actif de l'électrode négative est porté à un potentiel d'insertion du lithium ou de formation d'un alliage de lithium, une partie du lithium va réagir avec l'électrolyte à la surface des grains de matériau actif de l'électrode négative pour former une couche de passivation à sa surface. La formation de cette couche de passivation consomme une quantité d'ions lithium non négligeable, ce qui se matérialise par une perte irréversible de capacité de l'accumulateur (cette perte étant qualifiée de capacité irréversible et pouvant être évaluée de l'ordre de 5 à 20% de la capacité totale initiale du système), du fait que les ions lithium ayant réagi ne sont plus disponibles pour les cycles ultérieurs de charge/décharge. D'autres réactions de surface peuvent également se produire avec consommation du lithium, comme la réduction de la couche d'oxyde située à la surface du matériau actif, notamment lorsque celui-ci est du silicium, pour former des composés du type $Li_4SiO_4$. Qui plus est, une partie des réactions d'insertion dans les matériaux d'insertion peuvent être irréversibles, ce qui consomme du lithium, qui ne sera plus disponible par la suite.

Il convient donc de minimiser ces pertes lors de la première charge ou à tout moins de la compenser, afin que la densité d'énergie de l'accumulateur soit la plus élevée possible.

Pour compenser ce phénomène, il peut être envisagé une source de lithium supplémentaire dans le matériau d'électrode négative, laquelle peut servir également de réserve d'ions pour compenser les pertes au cours de la durée de vie de l'accumulateur et ainsi l'améliorer.

Pour ce faire, il a été proposé des techniques d'introduction de lithium additionnel dans l'électrode négative pour pallier l'inconvénient susmentionné, parmi lesquelles il peut être cité les techniques « *in situ* » de prélithiation et les techniques « *ex situ* » de prélithiation.

Concernant les techniques dites « *in situ* », celles-ci consistent à introduire du lithium métallique (c'est-à-dire au degré d'oxydation « 0 ») dans l'électrode négative par exemple sous forme d'une poudre de lithium métallique stabilisée par une couche protectrice (comme décrit dans Electrochemistry Communications 13 (2011) 664-667*)* mélangée avec l'encre comprenant les ingrédients de l'électrode négative (à savoir, le matériau actif, les conducteurs électroniques et un liant organique), l'insertion de lithium se faisant de manière spontanée par un phénomène de corrosion, l'avantage de cette technique étant qu'elle peut s'intégrer directement dans le processus de fabrication des électrodes avec toutefois les inconvénients de ne pas pouvoir permettre l'utilisation des voies aqueuses pour la fabrication des électrodes, du fait de l'utilisation de lithium métallique et de laisser subsister des porosités résiduelles dans l'électrode, une fois le lithium consommé.

Concernant les techniques « *ex situ* », celles-ci consistent à prélithier électrochimiquement l'électrode négative, par exemple, par voie galvanostatique, en plaçant celle-ci dans un montage comportant un bain électrolytique et une contre-électrode comprenant du lithium, ces techniques permettant de contrôler la quantité de lithium introduite dans l'électrode négative mais présentant toutefois l'inconvénient de nécessiter la mise en place d'un montage expérimental lourd. En particulier, étant donné que l'électrode est très réactive à l'air ou à l'humidité, l'ensemble des étapes d'assemblage de l'accumulateur doit être réalisé sous atmosphère parfaitement inerte.

Au vu de l'état de l'art, il existe un véritable besoin pour des électrodes négatives pour accumulateur à insertion-désinsertion métallique présentant un taux de métallisation suffisamment important dans tout le volume des électrodes, afin de permettre de pallier les pertes de capacité irréversible et, qui plus est, présentant une surface suffisamment importante pour pouvoir être utilisées, notamment, dans des accumulateurs à architecture spiralée.

Les auteurs de la présente invention se sont fixé pour objectif de combler ce besoin au moyen d'électrodes négatives se caractérisant par un design spécifique.

## EXPOSE DE L'INVENTION

Ainsi, l'invention a trait à une électrode négative pour accumulateur fonctionnant selon le principe d'insertion et désinsertion ionique et/ou selon le principe de formation d'un alliage et de désalliage comprenant :

- une première couche comprenant un matériau actif déposé, *via* une de ses faces, sur une première face d'un collecteur de courant ;
- une deuxième couche comprenant un matériau actif déposé, *via* une de ses faces, sur une deuxième face d'un collecteur de courant, ladite première face étant opposée à ladite deuxième face ;

ladite électrode négative s'étendant en longueur selon une direction longitudinale d'électrode, caractérisée en ce que chacune des première couche et deuxième couche est revêtue partiellement d'un ensemble de bandes composées chacune d'un métal, dont les cations correspondants sont ceux intervenant dans le processus d'insertion et désinsertion ionique et/ou dans le processus de formation d'alliage et de désalliage dans le matériau actif de la première couche et de la deuxième couche, lesdites bandes étant écartées les unes des autres selon la direction longitudinale d'électrode et s'étendant chacune en longueur selon une direction longitudinale de bande sensiblement perpendiculaire à ladite direction longitudinale d'électrode.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Par matériau actif, on entend, classiquement, dans ce qui précède et ce qui suit, lorsque l'accumulateur fonctionne selon le principe de l'insertion et désinsertion ionique, le matériau qui est directement impliqué dans les réactions réversibles d'insertion et de désinsertion des ions dans les matériaux actifs d'électrode lors des processus de charge et de décharge, en ce sens qu'il est apte à insérer et désinsérer des ions dans son réseau (plus spécifiquement, ici, les cations correspondants au métal constitutif des bandes susmentionnées, ces ions pouvant être des ions alcalins, notamment des ions lithium, lorsque l'accumulateur est un accumulateur lithium-ion, des ions sodium, lorsque l'accumulateur est un accumulateur sodium-ion, des ions potassium, lorsque l'accumulateur est un accumulateur potassium-ion ou des ions alcalino-terreux, tels que des ions magnésium, lorsque l'accumulateur est un accumulateur magnésium-ion ou des ions calcium, lorsque l'accumulateur est un accumulateur calcium-ion).

Par matériau actif, on entend, classiquement, dans ce qui précède et ce qui suit, lorsque l'accumulateur fonctionne selon le principe de formation d'alliage et de désalliage, un matériau qui est impliqué dans les réactions d'alliage ou de désalliage lors des processus de charge et de décharge.

Par métal, on entend, dans ce qui précède et ce qui suit, l'élément métallique à son degré d'oxydation 0.

Par direction longitudinale d'électrode, on entend, classiquement, dans ce qui précède et ce qui suit, la direction selon laquelle s'étend la plus grande longueur de l'électrode, l'électrode présentant préférentiellement une forme de bande.

Par direction longitudinale de bande, on entend, classiquement dans ce qui précède et ce qui suit, la direction selon laquelle s'étend, pour chacune des bandes, sa plus grande longueur, la direction longitudinale de chacune des bandes étant sensiblement perpendiculaire, plus spécifiquement, perpendiculaire à la direction longitudinale d'électrode.

En proposant un tel design d'électrodes, les auteurs de la présente invention ont ainsi apporté une solution aux problèmes de perte de capacité irréversible pour des électrodes, par exemple, de grande surface, destinées notamment à une architecture spiralée d'accumulateur, en permettant une diffusion, après corrosion, dans tout le volume de l'électrode, des cations issus du métal constitutif des bandes présentes sur les deux faces de l'électrode.

En effet, une fois les électrodes de l'invention mises en contact avec un électrolyte (à savoir, une fois qu'elles sont montées dans un accumulateur ou alors après mise en contact avec un électrolyte avant assemblage de l'électrode négative dans un accumulateur), les bandes composées d'un métal vont subir un phénomène de corrosion, dont ils résultent des cations (lesquels cations correspondent à ceux intervenant dans le processus d'insertion-désinsertion ou de formation d'alliage-désalliage des accumulateurs, dans lesquels elles sont destinées à être incorporées) qui vont pouvoir diffuser dans l'épaisseur de la première couche et dans l'épaisseur de la deuxième couche.

Avec un tel design, grâce à cette disposition spécifique de bandes, les électrodes négatives de l'invention sont également particulièrement adaptées pour être enroulées selon un axe parallèle à la direction de largeur d'électrode de sorte à entrer dans la constitution d'un accumulateur à architecture spiralée, cet enroulement se produisant plus facilement qu'avec un type d'électrode où chaque ensemble de bandes serait remplacé par une couche s'étendant selon la direction longitudinale d'électrode. Il est ainsi possible d'utiliser des bandes d'épaisseur plus importante que l'épaisseur envisageable si ces bandes étaient remplacées sur la première couche et sur la deuxième couche par une couche composée d'un métal s'étendant dans la direction longitudinale d'électrode.

Les électrodes négatives de l'invention se présentent, ainsi sous forme d'électrodes bicouches (à savoir comprenant une première couche comprenant un matériau actif et une deuxième couche comprenant un matériau actif), les deux couches étant disposées de part et d'autre d'un collecteur de courant, ces deux couches étant revêtues sur une de leurs faces (plus spécifiquement, la face opposée à celle qui est en contact avec le collecteur de courant) d'un ensemble de bandes tel que défini ci-dessus, lesdites bandes étant composées d'un métal, dont les cations correspondants sont ceux intervenant dans le processus d'insertion ou désinsertion ionique et/ou dans le processus de formation d'alliage et de désalliage dans le matériau actif de la première couche et de la deuxième couche.

Le matériau actif de la première couche est, classiquement, identique à celui de la deuxième couche.

Par ailleurs, le matériau actif de la première couche et le matériau actif de la deuxième couche n'est, avantageusement, pas constitué du métal entrant dans la constitution des bandes de l'ensemble de bandes revêtant la première couche et l'ensemble de bandes revêtant la deuxième couche.

Le matériau actif, que ce soit pour la première couche et/ou la deuxième couche, peut être, en particulier, un matériau apte à intercaler ou désintercaler des ions qui sont ceux issus du métal constitutif des bandes de l'ensemble de bandes revêtant la première couche et de l'ensemble de bandes revêtant la deuxième couche et qui assurent le fonctionnement à l'accumulateur, lorsque celui-ci fonctionne selon le principe d'insertion et désinsertion ionique.

Le matériau actif, que ce soit pour la première couche ou la deuxième couche, peut être, en particulier, un matériau apte à intercaler ou désintercaler des ions qui sont de nature identique à ceux issus du métal constitutif.

Plus spécifiquement, le matériau actif, que ce soit pour la première couche et/ou la deuxième couche, peut être, en particulier :

- un matériau apte à intercaler ou désintercaler des ions alcalins, lorsque l'accumulateur est un accumulateur $M^1$-ion avec $M^1$ représentant un ion alcalin (tel que des ions lithium, lorsque l'accumulateur est un accumulateur lithium-ion ; des ions sodium, lorsque l'accumulateur est un accumulateur sodium-ion ; des ions potassium, lorsque l'accumulateur est un accumulateur potassium-ion) et que les bandes de l'ensemble de bandes revêtant la première couche et les bandes de l'ensemble de bandes revêtant la deuxième couche sont en un métal alcalin ; ou
- un matériau apte à intercaler ou désintercaler des ions alcalino-terreux, lorsque l'accumulateur est un accumulateur $M^2$-ion avec $M^2$ représentant un ion alcalino-terreux (tel que des ions magnésium, lorsque l'accumulateur est un accumulateur magnésium-ion ; des ions calcium, lorsque l'accumulateur est un accumulateur calcium-ion) et que les bandes de l'ensemble de bandes revêtant la première couche et les bandes de l'ensemble de bandes revêtant la deuxième couche sont en un métal alcalino-terreux.

En particulier, le matériau actif, que ce soit pour la première couche et/ou la deuxième couche, peut être choisi parmi :

- le silicium ;
- un matériau carboné, tel que du carbone dur (connu sous l'appellation anglo-saxonne « *hard carbon* »), du graphite naturel ou du graphite artificiel ; et
- des mélanges de ceux-ci ;

ces matériaux actifs étant adaptés pour les accumulateurs du type $M^1$-ion ou $M^2$-ion mentionnés ci-dessus.

A titre d'exemple de matériau actif, il peut être cité, en particulier, un matériau composite silicium-graphite, lequel se compose, par exemple, d'un agrégat de particules de graphite et de particules de silicium.

En outre, la première couche ainsi que la deuxième couche peuvent comprendre, outre un matériau actif, au moins un liant organique et au moins un matériau carboné conducteur électronique.

Le ou les liants organiques peuvent être choisis parmi les polymères vinyliques, tels que les polyfluorures de vinylidène (connus sous l'abréviation PVDF), les celluloses modifiées, telles que les carboxyméthylcelluloses (connues sous l'abréviation CMC) éventuellement sous forme de sels (par exemple, les carboxyméthylcelluloses de sodium, les carboxyméthylcelluloses d'ammonium), les latex de copolymère styrène-butadiène (connus sous l'appellation SBR), les polyacrylates, tels que les polyacrylates de lithium, les polyamides, les polyimides, les polyesters et les mélanges de ceux-ci.

Le matériau carboné conducteur électronique peut être un matériau comprenant du carbone à l'état élémentaire et, de préférence, sous forme divisée, tel que des particules sphériques, des plaquettes ou des fibres.

On peut citer, comme matériau carboné, du graphite ; des billes de mésocarbone ; des fibres de carbone ; du noir de carbone, tel que du noir d'acétylène, du noir tunnel, du noir de fourneau, du noir de lampe, du noir d'anthracène, du noir de charbon, du noir de gaz, du noir thermique; du graphène ; des nanotubes de carbone ; et des mélanges de ceux-ci.

Le matériau actif peut être présent, dans la première couche ou la deuxième couche, en un teneur allant de 50 à 99% en masse par rapport à la masse totale des ingrédients de la première couche ou deuxième couche.

Le ou les liants organiques peuvent être présents en une teneur allant de 1 à 35% massique par rapport à la masse totale des ingrédients de la première ou deuxième couche.

Enfin, le cas échéant, le matériau carboné conducteur électronique peut être présent en une teneur allant de 1 à 20% massique par rapport à la masse totale des ingrédients de première couche ou deuxième couche.

Chacune de ces couches (à savoir la première couche et la deuxième couche) peut présenter une épaisseur pouvant aller de 10 $\mu$m à 200 $\mu$m et peut présenter, par ailleurs, une largeur allant de 0,001 m à 1 m et une longueur allant de 0,01 m à 100 m.

Selon l'invention, chacune des première couche et deuxième couche est revêtue partiellement par un ensemble de bandes composées d'un métal, dont les cations correspondants sont ceux intervenant dans le processus d'insertion et désinsertion ionique ou de formation d'alliage et désalliage dans le matériau actif de la première couche et deuxième couche, lesdites bandes étant écartées les unes des autres selon la direction longitudinale d'électrode et s'étendant chacune en longueur selon une direction longitudinale de bande sensiblement perpendiculaire à ladite direction longitudinale d'électrode.

Il s'entend que la face de la première couche et la face de la deuxième couche, sur lesquelles est, pour chacune d'entre elles, déposé un ensemble de bandes, ne correspondent pas aux faces, qui servent de faces de dépôt sur le collecteur de courant. En d'autres termes, la première couche et la deuxième couche peuvent être définies chacune comme une couche comprenant un matériau actif déposée, *via* une première face, sur une face d'un collecteur de courant et étant revêtue sur une deuxième face par un ensemble de bandes, tel que défini ci-dessus, chaque bande étant composé d'un métal, dont les cations correspondants sont ceux intervenant dans le processus d'insertion ou désinsertion ionique ou de formation d'alliage ou désalliage dans le matériau actif de la première couche et deuxième couche, ladite première face et ladite deuxième face étant opposées l'une à l'autre.

Les bandes composées d'un métal de l'ensemble de bandes revêtant la première couche et de l'ensemble de bandes revêtant la deuxième couche peuvent être, en particulier :

- des bandes composées d'un métal alcalin, lorsque l'accumulateur, dans lequel est destinée à être incorporée l'électrode négative, est un accumulateur $M^1$-ion avec $M^1$ représentant un ion alcalin (tel que des ions lithium, lorsque l'accumulateur est un accumulateur lithium-ion, auquel cas les bandes sont composées de lithium métallique; des ions sodium, lorsque l'accumulateur est un accumulateur sodium-ion, auquel cas les bandes sont composées de sodium métallique; des ions potassium, lorsque l'accumulateur est un accumulateur potassium-ion, auquel cas les bandes sont composées de potassium métallique) ; ou
- des bandes composées d'un métal alcalino-terreux, lorsque l'accumulateur, dans lequel est destinée à être incorporée l'électrode négative, est un accumulateur $M^2$-ion avec $M^2$ représentant un ion alcalino-terreux (tel que des ions magnésium, lorsque l'accumulateur est un accumulateur magnésium-ion, auquel cas les bandes sont composées de magnésium métallique; des ions calcium, lorsque l'accumulateur est un accumulateur calcium-ion, auquel cas les bandes sont composées de calcium métallique).

Chacune de ces bandes de l'ensemble de bandes revêtant la première couche et de l'ensemble de bandes revêtant la deuxième couche peut se présenter sous forme d'une bande métallique présentant une épaisseur pouvant aller de 1 $\mu$m à 200 $\mu$m, par exemple, une épaisseur supérieure ou égale à 50 $\mu$m, par exemple, égale à 50 $\mu$m et peut présenter, par ailleurs, une largeur identique à celle de l'électrode et une longueur allant de 0,1 cm à 2 cm.

Pour chaque couche, l'ensemble des bandes est composé de n bandes, n étant entier au moins égal à 3 et, plus spécifiquement, pouvant aller de 3 à 100 (par exemple, égal à 12).

En particulier, l'ensemble de bandes de la première couche et l'ensemble de bandes de la deuxième couche présentent le même nombre de bandes. Encore plus spécifiquement, les bandes de l'ensemble de bandes de la première couche et les bandes de l'ensemble de bandes de la deuxième couche présentent les mêmes dimensions (par exemple, en termes d'épaisseur, de longueur et de largeur).

Le collecteur de courant disposé entre la première couche et la deuxième couche peut être un collecteur plein et, plus spécifiquement, se présenter sous forme d'un feuillard métallique.

Le collecteur de courant peut présenter une épaisseur allant de 5 $\mu$m à 100 $\mu$m, par exemple, de 10 $\mu$m, et pouvant présenter, par ailleurs, une longueur allant de 0,01 m à 100 m et une largeur allant de 0,001 m à 1 m et présentant une forme générale de bande.

Enfin, d'un point de vue constitutif, le collecteur de courant peut comprendre (voire être constitué d') un ou plusieurs métaux choisis parmi le cuivre, l'aluminium, le titane et les alliages de ceux-ci.

Selon un mode particulier de réalisation de l'invention, chaque couche (à savoir, la première couche et la deuxième couche susmentionnées) présente une première extrémité dépourvue de bandes s'étendant selon la direction longitudinale d'électrode, laquelle première extrémité présentant une longueur $z_1$ (selon la direction longitudinale d'électrode), cette longueur $z_1$ étant de préférence identique pour la première couche et pour la deuxième couche. Qui plus est, la longueur $z_1$ présente, en particulier, une valeur supérieure à l'écartement maximal $y_1$ selon la direction longitudinale d'électrode pour chacun des couples de deux bandes directement consécutives de l'ensemble de bandes. En particulier, l'écartement maximal $y_1$ est identique pour chacun des couples de deux bandes directement consécutives de l'ensemble de bandes de la première couche et cet écartement maximal $y_1$ est identique pour chacun des couples de deux bandes directement consécutives de l'ensemble de bandes de la deuxième couche. Encore plus spécifiquement, cet écartement maximal $y_1$ peut être égal pour la première couche et pour la première couche.

Par ailleurs, chaque couche (à savoir la première couche et la deuxième couche susmentionnées) présente une deuxième extrémité dépourvue de bandes s'étendant selon la direction longitudinale d'électrode et opposée à la première extrémité. Cette deuxième extrémité peut présenter une longueur $x_1$ (selon la direction longitudinale d'électrode) inférieure à la longueur $z_1$, cette longueur $x_1$ étant, de préférence, identique pour la première couche et la deuxième couche de même, qu'avantageusement, la longueur $z_1$ est, de préférence, identique, pour la première couche et la deuxième couche.

Cette longueur $z_1$ peut être, en particulier, régie par la relation suivante :

$$z_1 = L - x_1 - y_1 * (1-n) - l * n$$

dans laquelle :

- L correspond à la longueur totale selon la direction longitudinale d'électrode de la couche concernée (à savoir, la première couche et/ou la deuxième couche) ;
- $x_1$ correspond à la longueur selon la direction longitudinale d'électrode de la deuxième extrémité de la couche concernée (à savoir, la première couche et/ou la deuxième couche) ;
- $y_1$ correspond à l'écartement, selon la direction longitudinale d'électrode, pour chacun des couples de deux bandes directement consécutives de l'ensemble de bandes de la couche concernée (à savoir, la première couche et/ou la deuxième couche) ;
- n correspond au nombre de l'ensemble de bandes de la couche concernée ;
- l correspond à la largeur (selon la direction longitudinale d'électrode) de chaque bande de l'ensemble de bandes.

En particulier :

- pour chaque ensemble de bandes, $y_1$ peut être identique pour chacun des couples de deux bandes directement consécutives de l'ensemble de bandes ;
- pour l'ensemble de bandes pour la première couche et l'ensemble de bandes pour la deuxième couche, $y_1$ peut être identique pour ces deux couches ;
- pour chaque ensemble de bandes, l peut être identique ;
- pour l'ensemble de bandes de la première couche et l'ensemble de bandes de la deuxième couche, l peut être identique pour chaque bande ; et/ou
- L, $x_1$ et n peuvent être identiques pour la première couche et la deuxième couche.

L'écartement $y_1$ peut être régi par la relation suivante :

$$y_1 = 2x_1$$

dans laquelle $x_1$ correspond à la définition donnée ci-dessus.

En particulier, l'écartement, selon la direction longitudinale d'électrode, pour chacun des couples de deux bandes directement consécutives de l'ensemble de bandes de la couche concernée (lequel écartement peut correspondre à celui dénommé $y_1$ dans les formules ci-dessus) peut être inférieur à 2 cm et, plus spécifiquement peut aller, avantageusement, de 0,1 cm à 2 cm, cette gamme correspondant à une distance de diffusion longitudinale optimale pour que la phase de corrosion s'effectue dans de bonnes conditions.

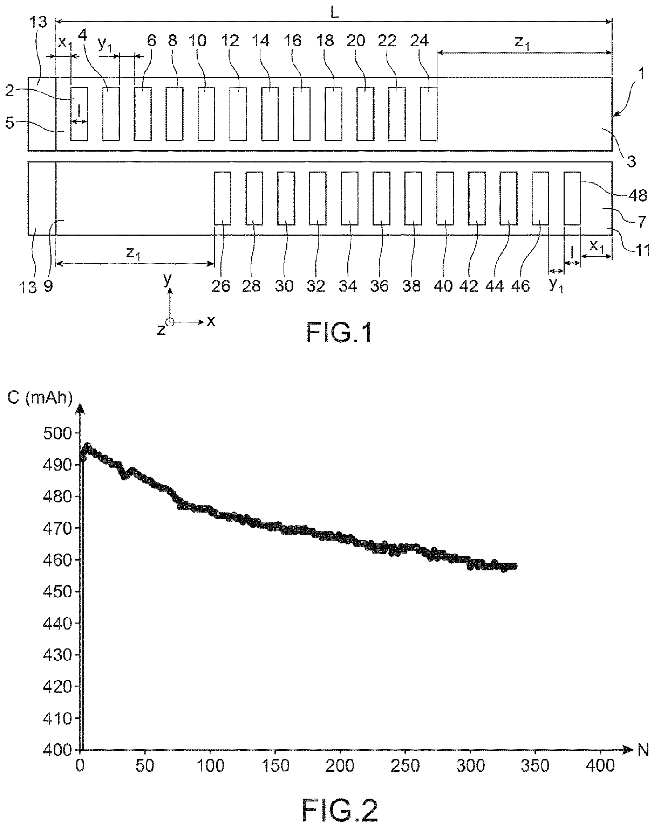

Selon un mode particulier de l'invention, la première extrémité de la première couche est située à l'opposé de la première extrémité de la deuxième couche selon la direction longitudinale d'électrode, cette situation étant notamment illustrée sur [Fig. 1], qui sera commentée plus loin ci-dessous.

Enfin, selon un autre mode particulier de l'invention, au moins une bande de l'ensemble de bandes de la première couche se situe, selon la direction d'épaisseur d'électrode, au moins en partie en correspondance d'une zone libre définie entre deux bandes directement consécutives revêtant la deuxième couche et réciproquement.

Par direction d'épaisseur d'électrode, on entend, dans ce qui précède et ce qui suit, la direction orthogonale à la fois à la direction longitudinale d'électrode et à la direction de largeur d'électrode.

Plus spécifiquement, chaque bande d'au moins une partie de l'ensemble de bandes de la première couche se situe, selon la direction d'épaisseur d'électrode, au moins en partie en correspondance d'une zone libre définie entre deux bandes directement consécutives revêtant la deuxième couche et réciproquement.

En d'autres termes, les bandes de la première couche et de la deuxième couche sont disposées de telle sorte que, lorsque l'électrode est vue selon la direction de largeur d'électrode, au moins une partie des bandes de la première couche et de la deuxième couche est agencée selon une disposition en quinconce.

Cette situation est illustrée sur [Fig. 1] jointe en annexe qui représente, selon une vue éclatée, les deux faces opposées d'une électrode spécifique conforme à l'invention et plus spécifiquement, les éléments suivantes :

- la première couche 1 présentant une longueur totale L présentant une première extrémité 3 de longueur $z_1$ et une deuxième extrémité 5 de longueur $x_1$ et étant revêtue, entre cette première extrémité et cette deuxième extrémité, d'un ensemble de 12 bandes (référencées respectivement 2, 4, 6, 8, 10, 12, 14, 16, 18, 20, 22 et 24) de largeurs l identiques, chaque couple de bandes directement consécutives étant espacé d'un espacement de valeur $y_1$;
- la deuxième couche 7 opposée à la première couche, ladite deuxième couche présentant une longueur totale L présentant une première extrémité 9 de longueur $z_1$ et une deuxième extrémité 11 de longueur $x_1$ et étant revêtue, entre cette première extrémité et cette deuxième extrémité, d'un ensemble de 12 bandes (référencées respectivement 26, 28, 30, 32, 34, 36, 38, 40, 42, 44, 46 et 48) de largeurs l identiques, chaque couple de bandes directement consécutives étant espacé d'un espacement de valeur $y_1$ ;
- les bandes référencées 12, 14, 16, 18, 20, 22 et 24 étant situées, selon la direction d'épaisseur d'électrode, au moins en partie en correspondance d'une zone libre définie entre deux bandes directement consécutives revêtant la deuxième couche, à savoir :

  - pour la bande 12, la zone libre définie entre les bandes 26 et 28 de la deuxième couche ;
  - pour la bande 14, la zone libre définie entre les bandes 28 et 30 de la deuxième couche ;
  - pour la bande 16, la zone libre définie entre les bandes 30 et 32 de la deuxième couche ;
  - pour la bande 18, la zone libre définie entre les bandes 32 et 34, de la deuxième couche ;
  - pour la bande 20, la zone libre définie entre les bandes 34 et 36 de la deuxième couche ;
  - pour la bande 22, la zone libre définie entre les bandes 36 et 38 de la deuxième couche ; et
  - pour la bande 24, la zone libre définie entre les bandes 38 et 40 de la deuxième couche.

Réciproquement, les bandes référencées 26, 28, 30, 32, 34, 36 et 38 sont situées, selon la direction d'épaisseur d'électrode, au moins en partie en correspondance d'une zone libre définie entre deux bandes directement consécutives revêtant la première couche, à savoir :

- pour la bande 26, la zone libre définie entre les bandes 10 et 12 de la première couche ;
- pour la bande 28, la zone libre définie entre les bandes 12 et 14 de la première couche ;
- pour la bande 30, la zone libre définie entre les bandes 14 et 16 de la première couche ;
- pour la bande 32, la zone libre définie entre les bandes 16 et 18, de la première couche ;
- pour la bande 34, la zone libre définie entre les bandes 18 et 20 de la première couche ;
- pour la bande 36, la zone libre définie entre les bandes 20 et 22 de la première couche ; et
- pour la bande 38, la zone libre définie entre les bandes 22 et 24 de la première couche.

La première couche 1 et la deuxième couche 9 sont déposées de part et d'autre d'un collecteur plein 11.

Sur cette figure est également représenté un repère illustrant la direction longitudinale d'électrode X, la direction de largeur d'électrode Y et la direction d'épaisseur d'électrode Z.

Les électrodes négatives conformes à l'invention peuvent être préparées selon un procédé comprenant les étapes suivantes :

a) une étape de dépôt sur un collecteur de courant d'une première couche comprenant un matériau actif sur une première face du collecteur de courant et d'une deuxième couche comprenant un matériau actif sur une deuxième face du collecteur de courant, ladite première face et ladite deuxième face étant opposées l'une à l'autre ;

b) une étape de dépôt sur chacune des couches (à savoir, la première couche et la deuxième couche) d'un ensemble de bandes composées chacune d'un métal, dont les cations correspondants sont ceux intervenant dans le processus d'insertion et désinsertion ionique ou de formation d'alliage ou désalliage dans le matériau actif de la première couche et de la deuxième couche, lesdites bandes étant écartées les unes des autres selon la direction longitudinale d'électrode et s'étendant chacune en longueur selon une direction longitudinale de bande sensiblement perpendiculaire à ladite direction longitudinale d'électrode.

L'étape de dépôt a) comporte ainsi deux phases : une opération de dépôt sur une première face du collecteur de courant de la première couche comprenant un matériau actif et une opération de dépôt sur une deuxième face du collecteur de courant de la deuxième couche comprenant un matériau actif, ces deux opérations pouvant être simultanées.

Plus spécifiquement, chaque opération de dépôt, qu'elles soient successives ou simultanées, peut consister à déposer une composition liquide (pouvant être qualifiée d'encre) comprenant les ingrédients constitutifs des couches concernées (en particulier, le matériau actif, éventuellement un liant organique et éventuellement un matériau carboné conducteur électronique), la composition liquide étant avantageusement identique pour la première couche et la deuxième couche, dès lors que la première couche et la deuxième couche sont identiques.

Ces opérations de dépôt peuvent être effectuées par des techniques de dépôt classiques, telles que de la pulvérisation, du trempage-retrait, de l'enduction, du dépôt par fente à extrusion (plus connue sous l'appellation anglaise « slot-die coating »).

Après chaque opération de dépôt, il peut être prévu un séchage de la couche ainsi déposée.

L'étape de dépôt b) sur chacune des couches peut consister à mettre en contact l'ensemble de bandes mentionné ci-dessus et selon la disposition voulue répondant aux critères de l'invention et à réaliser un co-laminage pour assurer une bonne adhérence entre l'ensemble de bandes et la couche concernée. Pour ce faire, l'ensemble formé par la première couche revêtue d'un ensemble de bandes, la deuxième couche revêtue d'un ensemble de bandes et le collecteur de courant disposé entre la première couche et la deuxième couche est passé dans un dispositif comprenant deux rouleaux permettant d'accéder une adhérence suffisante sans ajouter trop de contraintes à l'électrode.

Les électrodes négatives de l'invention peuvent être introduites telles quelles dans un accumulateur et, lorsque celui-ci est un accumulateur à architecture spiralée, celles-ci peuvent être assemblées selon les techniques usuelles d'assemblage par spiralage.

L'invention a trait également à un procédé d'activation d'une électrode négative telle que définie ci-dessus comprenant une étape de mise en contact de l'électrode négative avec un électrolyte pendant une durée et une température fixées pour engendrer la corrosion du métal des ensembles de bandes en cations métalliques (par exemple, en cations $Li^+$ lorsque les ensembles de bandes sont constitués de lithium, en cations $Na^+$ lorsque les ensembles de bandes sont constitués de sodium, en cations K+, lorsque les ensembles de bandes sont constitués de potassium).

Plus spécifiquement, l'étape de mise en contact peut être réalisée par les opérations suivantes :

- une opération de placement de l'électrode négative dans un dispositif du type accumulateur à insertion et désinsertion ionique ou à formation d'alliage et désalliage ;
- une opération de mise en contact de l'accumulateur avec un électrolyte pendant une durée et une température fixées pour engendrer la corrosion du métal des ensembles de bandes en cations métalliques (par exemple, en cations $Li^+$ lorsque les ensembles de bandes sont constitués de lithium, en cations $Na^+$ lorsque les ensembles de bandes sont constitués de sodium, en cations $K^+$, lorsque les ensembles de bandes sont constitués de potassium).

L'opération de mise en contact peut être effectuée en plaçant ledit accumulateur dans un sachet comprenant l'électrolyte, ce sachet pouvant être un sachet souple ou rigide fermé de façon hermétique (par exemple, un sachet thermoscellé) puis en plaçant le sachet comprenant l'électrolyte dans une étuve pendant une durée et une températures fixées (par exemple, 40°C pendant 4 jours). Concomitamment, à cette opération de mise en contact, il peut être appliqué une pression pour générer une contrainte mécanique qui va permettre une meilleure diffusion des ions métalliques issus de la corrosion.

L'électrolyte peut être, en particulier, un électrolyte liquide comprenant un sel métallique dissous dans au moins un solvant organique, tel qu'un solvant apolaire aprotique, le sel métallique comprenant, plus spécifiquement, un cation métallique étant de nature identique aux cations métalliques issus de la corrosion de la couche constitué d'un métal.

Le sel métallique peut être notamment un sel de lithium, lorsque les bandes sont composées de lithium.

A titre d'exemples de sel de lithium, on peut citer $LiClO_4$, $LiAsF_6$, $LiPF_6$, $LiBF_4$, $LiRfSO_3$, $LiCH_3SO_3$, $LiN(RfSO_2)_2$, Rf étant choisi parmi F ou un groupe perfluoroalkyle comportant de 1 à 8 atomes de carbone, du trifluorométhanesulfonylimidure de lithium (connu sous l'abréviation LiTFSI), du bis(oxalato)borate de lithium (connu sous l'abréviation LiBOB), du bis(perfluoréthylsulfonyl)imidure de lithium (également connu sous l'abréviation LiBETI), du fluoroalkylphosphate de lithium (connu sous l'abréviation LiFAP).

A titre d'exemples de solvants organiques susceptibles d'entrer dans la constitution de l'électrolyte, on peut citer les solvants carbonates, tels que les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC).

A titre d'exemples de solvants carbonates linéaires, on peut citer le carbonate de diéthyle (symbolisé par l'abréviation DEC), le carbonate de diméthyle (symbolisé par l'abréviation DMC) ou le carbonate d'éthylméthyle (symbolisé par l'abréviation EMC).

A l'issue du procédé mentionné ci-dessus, les ensembles de bandes ont été corrodés, dont tout ou partie du métal a été transformé en ions métalliques qui se sont combinés avec le matériau actif et/ou ont contribué à la formation d'une couche de passivation à la surface de l'électrode.

Enfin, l'invention a trait à un accumulateur fonctionnant sur le principe de l'insertion et désinsertion ionique et/ou selon le principe de la formation d'alliage et désalliage comprenant une électrode négative telle que définie ci-dessus ou une électrode négative obtenue à l'issue du procédé d'activation défini ci-dessus.

Plus spécifiquement, lorsque l'accumulateur est à configuration spiralée, celui-ci comprenant une électrode positive et une électrode négative telle que définie ci-dessus, l'électrode positive et l'électrode négative étant disposées de part et d'autre d'un séparateur électrolytique, l'ensemble formé de l'électrode positive, du séparateur électrolytique et de l'électrode négative étant enroulé pour former un enroulement spiralé. Plus spéciquement, l'électrode négative est enroulée selon un axe parallèle à la direction de largeur d'électrode.

On précise que, par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

L'électrode positive comprend, classiquement, un matériau actif, c'est-à-dire un matériau apte à intervenir dans les réactions d'insertion et de désinsertion se produisant lors du fonctionnement de l'accumulateur (lorsque celui-ci fonctionne selon le principe d'insertion et désinsertion ionique) ou dans les réactions de formation d'alliage et de désalliage (lorsque l'accumulateur est un accumulateur fonctionnant selon le principe de la formation d'alliage et de désalliage).

Lorsque l'accumulateur est un accumulateur du type $M^1$-ion ($M^1$ étant un ion alcalin, tel que Li, Na, K), le matériau actif de l'électrode peut être un matériau du type oxyde de $M^1$ comprenant au moins un élément métallique de transition et/ou de post-transition, du type phosphate de $M^1$ comprenant au moins un élément métallique de transition, du type silicate de $M^1$ comprenant au moins un élément métallique de transition ou du type borate de $M^1$ comprenant au moins un élément métallique de transition.

Comme exemples de composés oxydes de $M^1$ comprenant au moins un élément métallique de transition et/ou de post-transition, on peut citer des oxydes simples ou des oxydes mixtes (c'est-à-dire des oxydes comprenant plusieurs éléments métalliques de transition et/ou de post-transition distincts) comprenant au moins un élément métallique de transition et/ou de post-transition, tels que des oxydes comprenant du nickel, du cobalt, du manganèse et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule suivante :

$$M^1M'O_2$$

dans laquelle M' est un élément choisi parmi Ni, Co, Mn, Al et les mélanges de ceux-ci et $M^1$ est un élément alcalin.

A titre d'exemples de tels oxydes, on peut citer les oxydes lithiés $LiCoO_2$, $LiNiO_2$ et les oxydes mixtes $Li(Ni,Co,Mn)O_2$ (tel que $Li(Ni_{1/3}Mn_{1/3}Co_{1/3})O_2$ ou $Li(Ni_{0,6}Mn_{0,2}Co_{0,2})O_2$ (connu également sous la dénomination NMC), $Li(Ni,Co,Al)O_2$ (tel que $Li(Ni_{0,8}Co_{0,15}-Al_{0,05})O_2$ connu également sous la dénomination NCA) ou $Li(Ni,Co,Mn,Al)O_2$, les oxydes dits riches en lithium $Li_{1+x}(Ni,Co,Mn)O_2$, x étant supérieur à 0.

A titre d'exemples de tels oxydes, on peut citer les oxydes sodés $NaCoO_2$, $NaNiO_2$ et les oxydes mixtes $Na(Ni,Co,Mn)O_2$ (tel que $Na(Ni_{1/3}Mn_{1/3}Co_{1/3})O_2$), $Na(Ni,Co,Al)O_2$ (tel que $Na(Ni_{0,8}Co_{0,15}-Al_{0,05})O_2$) ou $Na(Ni,Co,Mn,Al)O_2$.

Comme exemples de composés phosphates de $M^1$ comprenant au moins un élément métallique de transition, on peut citer les composés de formule $M^1M''PO_4$, dans laquelle M'' est choisi parmi Fe, Mn, Ni, Co et les mélanges de ceux-ci et $M^1$ est un élément alcalin, tel que $LiFePO_4$.

Comme exemples de composés silicates de $M^1$ comprenant au moins un élément métallique de transition, on peut citer les composés de formule $M^1{}_2M'''SiO_4$, dans laquelle M''' est choisi parmi Fe, Mn, Co et les mélanges de ceux-ci et $M^1$ est un élément alcalin.

Comme exemples de composés borates lithiés comprenant au moins un élément métallique de transition, on peut citer les composés de formule $M^1M'''BO_3$, dans laquelle M''' est choisi parmi Fe, Mn, Co et les mélanges de ceux-ci et $M^1$ est un élément alcalin.

Lorsque l'accumulateur est un accumulateur du type $M^2$-ion ($M^2$ étant un ion alcalino-terreux), le matériau actif de l'électrode peut être $MoS_6$.

En outre, l'électrode positive peut comprendre également au moins un liant organique tel qu'un liant polymérique, comme du polyfluorure de vinylidène (PVDF), un mélange carboxyméthylcellulose avec un latex du type styrène et/ou acrylique ainsi qu'au moins un additif conducteur de l'électricité, qui peut être des matériaux carbonés, comme du noir de carbone. Qui plus est, l'électrode positive peut se présenter, d'un point de vue structural, comme un matériau composite comprenant une matrice en liant(s) organique(s) au sein de laquelle sont dispersées des charges constituées par le matériau actif (se présentant, par exemple, sous forme particulaire) et éventuellement le ou les additifs conducteurs de l'électricité.

Le séparateur électrolytique est classiquement une membrane polymérique poreuse imprégnée d'un électrolyte, tel qu'un électrolyte liquide tel que défini ci-dessus.

La description des électrodes négatives de l'invention a été effectuée en adoptant une configuration planaire de celle-ci mais ces électrodes peuvent être utilisées en étant enroulées selon un axe parallèle à la direction de largeur d'électrode, ce qui est le cas des accumulateurs de l'invention adoptant une architecture bobinée ou spiralée, pour laquelle les électrodes négatives de l'invention sont particulièrement adaptées.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

## BRÈVE DESCRIPTION DES DESSINS

[Fig. 1], déjà commentée, illustre une électrode négative spécifique conforme à l'invention et représentée en vue éclatée.

[Fig. 2] est un graphique représentant l'évolution de la capacité déchargée C (en mAh) en fonction du nombre de cycles N.

## EXPOSÉ DÉTAILLÉ DE MODES DE RÉALISATION PARTICULIERS

EXEMPLE

Cet exemple illustre la préparation d'un accumulateur à architecture spiralée, dans lequel l'électrode négative correspond à celle illustrée sur [Fig. 1] jointe en annexe.

Plus spécifiquement, l'accumulateur comprend :

- une électrode positive composée d'un matériau composite comprenant un matériau actif du type NMC à hauteur de 92% massique, un additif conducteur électronique noir de carbone de type Super P65 (Imerys) à hauteur de 4% massique et un liant PVDF (Solvay) à hauteur de 4% massique, l'électrode positive présentant une épaisseur de 65 $\mu$m et étant associée à un collecteur de courant du type feuillard en aluminium présentant une épaisseur de 20 $\mu$m, la capacité surfacique de l'électrode positive étant fixée à $2mAh/cm^2$/face ;
- un séparateur polymérique du type Celgard® 2320 de 20 $\mu$m d'épaisseur avec une porosité de 40% ;
- pour l'électrode négative, la première couche et la deuxième couche composées d'un matériau composite comprenant un matériau actif consistant en un composite graphite-silicium à hauteur de 92% massique, un additif conducteur électronique noir de carbone de type Super P65 à hauteur de 2% massique et un liant de type polymère acrylique à hauteur de 6% massique, ladite électrode étant associée à un collecteur de courant du type feuillard de cuivre d'épaisseur 10 $\mu$m.

La capacité surfacique de l'électrode négative est fixée à $6mAh/cm^2$/face. Il reste alors à prélithier 4 $mAh/cm^2$,

et ainsi conserver 2mAh/cm$^2$ cyclable avec la capacité de l'électrode positive.

L'électrode positive d'épaisseur 65 $\mu$m présente une longueur de 239 mm sur une largeur de 63 mm. Le collecteur est à nu sur une bande de 6 mm de large à l'une des extrémités de la bande afin de pouvoir réaliser une soudure de patte de reprise de courant en aluminium.

L'électrode négative d'épaisseur 100 $\mu$m présente une longueur de 310 mm et une largeur de 66 mm. Le collecteur est à nu sur une bande de 6 mm à l'une des extrémités de la bande afin de souder une patte de reprise de courant en Nickel.

On calcule que 24 bandes de 50x10 mm (50 $\mu$m d'épaisseur) de lithium correspondent à 120cm$^2$, soit les 1200mAh nécessaires pour prélithier 4mAh/cm d'électrode négative.

Les bandes de lithium de 50 $\mu$m d'épaisseur sont disposées sur l'électrode négative de la manière illustrée sur [Fig. 1], avec les dimensions suivantes : $x_1$ correspondant à 5 mm et $y_1$ correspondant à 10 mm.

Elles sont également réparties en évitant de les disposer sur les débuts et fin d'électrodes qui sont inactives dans le design spiralé prismatique choisi (enroulement sur un mandrin plat de 34mm de large), la longueur $z_1$ de 69 mm correspondant au premier et dernier tours du bobinot, où l'électrode négative n'est pas en face d'une électrode positive.

L'accumulateur est fabriqué en enroulant simultanément les 4 composants (électrode positive/séparateur/électrode négative/séparateur) afin de former une bobine prismatique de dimension 40x70x5 mm.

L'accumulateur ainsi obtenu est placé dans un sachet souple aluminisé (emballage multicouche comprenant un polymère thermofusible type polypropylène laminé sur un feuillard d'aluminium faisant office de pare-vapeur et une troisième polymère type polyamide dont la température de fusion est supérieure à celle de la couche interne) puis rempli d'électrolyte comprenant du LiPF$_6$ (1M) et un mélange de carbonate d'éthylméthyle (EMC) et du carbonate de fluoroéthylène (selon une proportion 70/30) et du carbonate de vinylène (VC) à hauteur de 2% massique. Le sachet est ensuite thermoscellé sous pression réduite.

L'accumulateur est ensuite placé 4 jours dans une étuve, dont la température est fixée à 40°C sous contrainte mécanique par le biais de plaques supports apposées de sorte à appliquer une pression de part et d'autre de l'accumulateur contenu dans le sachet, ce traitement permettant d'obtenir une corrosion de la couche composée de lithium et une diffusion des ions lithium dans toute l'épaisseur de l'électrode négative.

A l'issue de ces 4 jours, l'accumulateur conforme à l'invention est soumis à un cycle de formation à C/10 entre 2,5 et 4,2V puis à un test de cyclage à C/20 pendant plus de 200 cycles, le résultat de ce test étant reporté sur [Fig. 2] jointe en annexe, laquelle figure illustre l'évolution de la capacité déchargée C (en mAh) en fonction du nombre de cycles N.

La capacité obtenue reste à un niveau élevé même après plus de 200 cycles.

## Revendications

1. Electrode négative pour accumulateur fonctionnant selon le principe d'insertion et désinsertion ionique et/ou selon le principe de formation d'un alliage et de désalliage comprenant :

   - une première couche (1) comprenant un matériau actif déposé, *via* une de ses faces, sur une première face d'un collecteur de courant (13) ;
   - une deuxième couche (7) comprenant un matériau actif déposé, *via* une de ses faces, sur une deuxième face d'un collecteur de courant (13), ladite première face étant opposée à ladite deuxième face ;

   ladite électrode négative s'étendant en longueur selon une direction longitudinale d'électrode, **caractérisée en ce que** chacune des première couche et deuxième couche est revêtue partiellement d'un ensemble de bandes (2, 4, 6, 8, 10, 12, 14, 16, 18, 20, 22, 24, 26, 28, 30, 32, 34, 36, 38, 40, 42, 44, 46, 48) composées chacune d'un métal, dont les cations correspondants sont ceux intervenant dans le processus d'insertion et désinsertion ionique et/ou dans le processus de formation d'alliage et de désalliage dans le matériau actif de la première couche et de la deuxième couche, lesdites bandes étant écartées les unes des autres selon la direction longitudinale d'électrode et s'étendant chacune en longueur selon une direction longitudinale de bande sensiblement perpendiculaire à ladite direction longitudinale d'électrode.

2. Electrode négative selon la revendication 1, dans laquelle les bandes composées d'un métal de l'ensemble de bandes (2, 4, 6, 8, 10, 12, 14, 16, 18, 20, 22, 24) revêtant la première couche et de l'ensemble de bandes (26, 28, 30, 32, 34, 36, 38, 40, 42, 44, 46, 48) revêtant la deuxième couche sont des bandes composées d'un métal alcalin ou des bandes composées d'un métal alcalino-terreux.

3. Electrode négative selon l'une quelconque des revendications précédentes, dans laquelle chacune des bandes de l'ensemble de bandes (2, 4, 6, 8, 10, 12, 14, 16, 18, 20, 22, 24) revêtant la première couche et de l'ensemble de bandes (26, 28, 30, 32, 34, 36, 38, 40, 42, 44, 46, 48) revêtant la deuxième couche se présente sous forme d'une bande métallique présentant une épaisseur supérieure ou égale à 50 $\mu$m.

4. Electrode négative selon l'une quelconque des revendications précédentes, dans laquelle chaque couche (à savoir, la première couche et la deuxième couche) présente une première extrémité (3, 9) dépourvue de bandes s'étendant selon la direction longitudinale d'électrode, laquelle première extrémité (3, 9) présentant une longueur $z_1$ selon la direction longitudinale d'électrode.

5. Electrode négative selon la revendication 4, dans laquelle la longueur $z_1$ présente une valeur supérieure à l'écartement maximal $y_1$ selon la direction longitudinale d'électrode pour chacun des couples de deux bandes directement consécutives de l'ensemble de bandes.

6. Electrode négative selon l'une quelconque des revendications précédentes, dans laquelle chaque couche (à savoir la première couche et la deuxième couche) présente une deuxième extrémité (5, 11) dépourvue de bandes s'étendant dans la direction longitudinale d'électrode et opposée à la première extrémité.

7. Electrode négative selon la revendication 6, dans laquelle la deuxième extrémité (5, 11) présente une longueur $x_1$ selon la direction longitudinale d'électrode inférieure à la longueur $z_1$.

8. Electrode négative selon la revendication 5 à 7, dans laquelle, la longueur $z_1$ est régie par la relation suivante :

$$z_1 = L - x_1 - y_1 * (1-n) - l * n$$

dans laquelle :

- L correspond à la longueur totale selon la direction longitudinale d'électrode de la couche concernée (à savoir, la première couche et/ou la deuxième couche) ;
- $x_1$ correspond à la longueur selon la direction longitudinale d'électrode de la deuxième extrémité de la couche concernée (à savoir, la première couche et/ou la deuxième couche) ;
- $y_1$ correspond à l'écartement, selon la direction longitudinale d'électrode, pour chacun des couples de deux bandes directement consécutives de l'ensemble de bandes de la couche concernée (à savoir, la première couche et/ou la deuxième couche) ;
- n correspond au nombre de l'ensemble de bandes de la couche concernée ;
- l correspond à la largeur selon la direction longitudinale d'électrode de chaque bande de l'ensemble de bandes.

9. Electrode négative selon l'une quelconque des revendications 5 à 8, dans laquelle l'écartement $y_1$ est régi par la relation suivante :

$$y_1 = 2x_1$$

dans laquelle $x_1$ correspond à la définition donnée à la revendication 8.

10. Electrode négative selon l'une quelconque des revendications précédentes, dans laquelle l'écartement, selon la direction longitudinale d'électrode, pour chacun des couples de deux bandes directement consécutives de l'ensemble de bandes de la couche concernée est inférieur à 2 cm.

11. Electrode négative selon l'une quelconque des revendications 6 à 10, dans laquelle la première extrémité (3) de la première couche (1) est située à l'opposé de la première extrémité (9) de la deuxième couche (7) selon la direction longitudinale d'électrode.

12. Electrode négative selon l'une quelconque des revendications précédentes, dans laquelle au moins une bande de l'ensemble de bandes de la première couche se situe, selon la direction d'épaisseur d'électrode, au moins en partie en correspondance d'une zone libre définie entre deux bandes directement consécutives revêtant la deuxième couche et réciproquement.

**13.** Electrode négative selon l'une quelconque des revendications précédentes, dans laquelle chaque bande d'au moins une partie de l'ensemble de bandes de la première couche se situe, selon la direction d'épaisseur d'électrode, au moins en partie en correspondance d'une zone libre définie entre deux bandes directement consécutives revêtant la deuxième couche et réciproquement.

**14.** Procédé de préparation d'une électrode négative telle que définie à la revendication 1, comprenant les étapes suivantes :

a) une étape de dépôt sur un collecteur de courant d'une première couche comprenant un matériau actif sur une première face du collecteur de courant et d'une deuxième couche comprenant un matériau actif sur une deuxième face du collecteur de courant, ladite première face et ladite deuxième face étant opposées l'une à l'autre ;

b) une étape de dépôt sur chacune des couches (à savoir, la première couche et la deuxième couche) d'un ensemble de bandes composées chacune d'un métal, dont les cations correspondants sont ceux intervenant dans le processus d'insertion et désinsertion ionique ou de formation d'alliage ou désalliage dans le matériau actif de la première couche et la deuxième couche, lesdites bandes étant écartées les unes des autres selon la direction longitudinale d'électrode et s'étendant chacune en longueur selon une direction longitudinale de bande sensiblement perpendiculaire à ladite direction longitudinale d'électrode.

**15.** Procédé d'activation d'une électrode négative telle que définie selon la revendication 1, comprenant une étape de mise en contact de l'électrode négative avec un électrolyte pendant une durée et une température fixées pour engendrer la corrosion du métal de la couche composée d'un métal en cations métalliques.

**16.** Accumulateur fonctionnant sur le principe de l'insertion-désinsertion ionique et/ou selon le principe de formation d'un alliage et de désalliage comprenant une électrode négative telle que définie selon l'une quelconque des revendications 1 à 13 ou une électrode négative obtenue à l'issue du procédé d'activation défini à la revendication 15.

**17.** Accumulateur selon la revendication 16, qui est un accumulateur à architecture spiralée, dans laquelle l'électrode négative est enroulée selon un axe parallèle à la direction de largeur d'électrode.

FIG.1

FIG.2

Europäisches
Patentamt

European
Patent Office

Office européen
des brevets

**RAPPORT DE RECHERCHE EUROPEENNE**

Numéro de la demande

EP 20 15 0218

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2010/216027 A1 (FUJII TSUTOMU [JP]) 26 août 2010 (2010-08-26) * alinéa [0044] * * alinéa [0034] * * figure 5 * * alinéa [0033] * * alinéa [0047] * * alinéa [0075] - alinéa [0081] * * revendication 5 * ----- | 1-17 | INV. H01M4/13 H01M4/133 H01M4/134 H01M4/1393 H01M4/1395 H01M10/052 |
| Y | WO 2010/087123 A1 (MURATA MANUFACTURING CO [JP]; TADA MITSUHIRO [JP]) 5 août 2010 (2010-08-05) * page 2 * * page 7 * * figures 8-10 * ----- | 1-17 | |
| A | WO 2004/059672 A1 (KANEBO LTD [JP]; ANDO NOBUO [JP] ET AL.) 15 juillet 2004 (2004-07-15) * le document en entier * ----- | 1-17 | |
| A | EP 3 410 516 A1 (PANASONIC IP MAN CO LTD [JP]) 5 décembre 2018 (2018-12-05) * le document en entier * ----- | 1-17 | DOMAINES TECHNIQUES RECHERCHES (IPC) H01M |
| A | US 2016/020461 A1 (YANG SZU-NAN [TW]) 21 janvier 2016 (2016-01-21) * le document en entier * ----- | 1-17 | |

Le présent rapport a été établi pour toutes les revendications

| Lieu de la recherche | Date d'achèvement de la recherche | Examinateur |
|---|---|---|
| Munich | 4 mai 2020 | Tylus, Urszula |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 20 15 0218

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-05-2020

| Document brevet cité au rapport de recherche | Date de publication | Membre(s) de la famille de brevet(s) | Date de publication |
|---|---|---|---|
| US 2010216027 A1 | 26-08-2010 | CN 101814372 A | 25-08-2010 |
| | | EP 2224514 A1 | 01-09-2010 |
| | | JP 5235715 B2 | 10-07-2013 |
| | | JP 2010199282 A | 09-09-2010 |
| | | KR 20100097027 A | 02-09-2010 |
| | | US 2010216027 A1 | 26-08-2010 |
| WO 2010087123 A1 | 05-08-2010 | JP WO2010087123 A1 | 02-08-2012 |
| | | WO 2010087123 A1 | 05-08-2010 |
| WO 2004059672 A1 | 15-07-2004 | AU 2003292781 A1 | 22-07-2004 |
| | | CN 1735949 A | 15-02-2006 |
| | | EP 1577914 A1 | 21-09-2005 |
| | | JP WO2004059672 A1 | 11-05-2006 |
| | | KR 20050116795 A | 13-12-2005 |
| | | US 2006057433 A1 | 16-03-2006 |
| | | US 2011041324 A1 | 24-02-2011 |
| | | WO 2004059672 A1 | 15-07-2004 |
| EP 3410516 A1 | 05-12-2018 | CN 108933278 A | 04-12-2018 |
| | | EP 3410516 A1 | 05-12-2018 |
| | | JP 2018206757 A | 27-12-2018 |
| | | US 2018342754 A1 | 29-11-2018 |
| US 2016020461 A1 | 21-01-2016 | CN 105280883 A | 27-01-2016 |
| | | EP 2975673 A1 | 20-01-2016 |
| | | ES 2754504 T3 | 17-04-2020 |
| | | HU E047277 T2 | 28-04-2020 |
| | | JP 6220822 B2 | 25-10-2017 |
| | | JP 2016029652 A | 03-03-2016 |
| | | KR 20160009512 A | 26-01-2016 |
| | | KR 20170101853 A | 06-09-2017 |
| | | TW 201605105 A | 01-02-2016 |
| | | US 2016020461 A1 | 21-01-2016 |

EPO FORM P0460

Pour tout renseignement concernant cette annexe : voir Journal Officiel de l'Office européen des brevets, No.12/82

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *Electrochemistry Communications,* 2011, vol. 13, 664-667